# EUROPÄISCHE PATENTSCHRIFT

(11) **EP 2 969 461 B1**
(45) Veröffentlichungstag und Bekanntmachung des Hinweises auf die Patenterteilung: **24.05.2017**
(21) Anmeldenummer: 14709291.0
(22) Anmeldetag: 11.03.2014
(51) Int. Cl.: B29C 45/16, B29C 45/26

(54) **HALTEVORRICHTUNG FÜR WENDESYSTEM**
HOLDING DEVICE FOR A STACK TURNING SYSTEM
DISPOSITIF DE SUPPORT POUR UNE PIÈCE CENTRALE ORIENTABLE DANS UN DISPOSITIF DE MOULAGE

(30) Priorität: 15.03.2013 CH 6132013
(43) Veröffentlichungstag der Anmeldung: 20.01.2016
(73) Patentinhaber: Foboha (Germany) GmbH, 77716 Haslach (DE)
(72) Erfinder: ARMBRUSTER, Rainer, 77709 Wolfach (DE)
(74) Vertreter: Rentsch Partner AG
(86) Internationale Anmeldenummer: PCT/EP2014/054713
(87) Internationale Veröffentlichungsnummer: WO 2014/140019

(56) Entgegenhaltungen:
- WO-A1-2007/082394
- WO-A1-2011/107395
- CH-A2- 705 140
- JP-A- H02 171 221

## Beschreibung

Die vorliegende Erfindung liegt auf dem Gebiet der Werkzeuge und Maschinen zum Spritzgiessen von Kunststoff.

Aus dem Stand der Technik sind Spritzgiessvorrichtungen mit einem oder mehreren drehenden Mittelteilen bekannt. Diese werden zur effizienten Herstellung von mehrkomponentigen Kunststoffteilen durch Spritzgiessen verwendet. Zwischen zwei entlang von Holmen gegeneinander in einer ersten Richtung verfahrbaren Formhälften ist mindestens ein drehbares Mittelteil angeordnet, das an einer Haltevorrichtung befestigt und um eine Drehachse drehbar angeordnet ist. Das drehbare Mittelteil weist mindestens zwei parallele Seitenflächen auf, entlang derer es mit den beiden Formhälften zur Bildung von Kavitäten zusammenwirkt. In gewissen Ausführungsformen kann der drehbare Mittelteil zumindest auf einer Seite mit einem weiteren drehbaren Mittelteil zusammenwirken. Koordinationsmittel bewirken, dass der drehbare Mittelteil beim Öffnen und beim Schliessen mittig zwischen den beiden Formhälften positioniert bleibt und so Kollisionen vermieden werden. Aus dem Stand der Technik sind diverse Haltevorrichtungen für den drehbaren Mittelteil bekannt.

EP1035959 und EP1155802 derselben Anmelderin wurden 1999 publiziert und betreffen beide eine Haltevorrichtung für ein drehbares Mittelteil (Form, Formhälfte, Formträger). Die Haltevorrichtung weist eine untere und eine obere Traverse auf, welche entlang der Holme einer Spritzgiessmaschine geführt sind. Jede Traverse der Haltevorrichtung weist ein drehbares Haltemittel auf, welches zum lösbaren Einspannen der Form, Formhälfte oder des Formträgers dazwischen dient.

EP1725386 derselben Anmelderin wurde 2005 publiziert und betrifft ein Verfahren und eine Spritzgiessvorrichtung mit mehr als einem drehbaren Mittelteil. Damit besteht die Möglichkeit, Teile in zwei äusseren Trennebenen herzustellen und diese in einem weiteren Verarbeitungsschritt in einer weiteren Trennebene zu montieren. In den Figuren sind unterschiedliche Ausgestaltungen von Haltevorrichtungen für die drehbaren Mittelteile dargestellt.

WO2011/107395 derselben Anmelderin wurde 2011 publiziert und beschreibt eine Haltevorrichtung mit modularem Aufbau, welche flexibel auf unterschiedliche Spritzgiessmaschinen angepasst werden kann. Es werden unterschiedliche Arten der Halterung beschrieben.Die CH705140 derselben Anmelderin offenbart eine Halterung für ein drehbares Formmittelteil mit einer feststehenden Säule, mit einem unteren Sockel oder einer Traverse, welche Linearlager für die unteren Holme einer Spritzgiessmaschine aufweisen und über Linearführungen in Längsrichtung der Spritzgiessmaschine gelagert sind bzw. auf dem Maschinenbett abgestützt werden können.

Die WO2007082394 derselben Anmelderin zeigt die Abstützung eines nicht drehbaren Formmittelteils auf den unteren und oberen Holmen einer Spritzgiessmaschine mittels zweier beabstandeter Linearlager.

EP1119449 von der Fa. Krauss Maffei wurde 2001 erstmals publiziert und zeigt eine Zweiplatten-Horizontalspritzgiessmaschine. Diese weist eine auf dem Maschinenbett gelagerte Haltevorrichtung für einen drehbaren Mittelteil auf. Die Erfindung besteht darin, dass die Haltevorrichtung komplett von den Holmen losgelöst und mit diesen keine Wirkverbindung aufweist. Alle auftretenden Kräfte werden über das Maschinenbett übertragen.

Eine Aufgabe der Erfindung besteht darin, eine verbesserte Haltevorrichtung für einen drehbaren Mittelteil in einer Spritzgiessvorrichtung zu zeigen, welche kürzere Zykluszeiten ermöglicht.

Um die Produktionskapazität zu steigern ist die Reduktion der Zykluszeit ein taugliches Mittel. Allerdings treten dabei auch höhere Kräfte auf, weil die Maschinenteile stärker beschleunigt und abgebremst werden müssen, damit sie mit dem Maschinentakt Schritt halten können. Die optimale Einleitung und Übertragung der Kräfte ist ein wichtiger Aspekt, um die Robustheit und die Langlebigkeit der Vorrichtung garantieren zu können. Sich negative auswirkende Zwangskräfte sind zu vermeiden. Ein Aspekt der Erfindung besteht darin, die Kräfte und deren Fluss gezielt auf mehrere Maschinenelemente aufzuteilen. Dabei werden die Gewichtslasten und die Drehmomente, welche zwischen einem drehbaren Mittelteil, bzw. einer Haltevorrichtung für diesen, und einer Spritzgiessmaschine teilweise oder ganz getrennt übertragen.Eine solche Vorrichtung weist mindestens eine auf einem Maschinenbett der Spritzgiessmaschine abgestützte und in Längsrichtung von Holmen der Spritzgiessmaschine verschiebbare Basis auf. Die Ausführungsform der Erfindung umfasst eine Haltevorrichtung für einen um eine vertikale Achse drehbaren Formmittelteil in einer Spritzgiessmaschine. Die Haltevorrichtung weist einen um eine Drehachse drehbaren und über einen Motor angetriebenen unteren Drehteller auf, der zur Aufnahme, bzw. Halterung des drehbaren Form-mittelteils dient. Bei Bedarf können mehrere Haltevorrichtungen hintereinander angeordnet sein. Der untere Drehteller ist gegenüber einer unteren Traverse um eine vertikale Achse drehbar angeordnet. Die untere Traverse ist über erste Lagerblöcke und auf einem Maschinenbett der Spritzgiessmaschine abgestützte Führungsschienen in Längsrichtung der Spritzgiessmaschine verschiebbar gelagert. Die Haltevorrichtung weist zweite Lagerblöcke auf, mittels denen die untere Traverse in Umfangsrichtung gegenüber einem unteren Paar von Holmen der Spritzgiessmaschine in Umfangsrichtung abgestützt ist. Erfindungsgemäss sind die zweiten Lagerblöcke paarweise an einem Holm in einem Abstand (a) zueinander angeordnet. Zur Vermeidung von negativen Kräften gegenüber den Holmen können die zweiten Lagerblöcke gegenüber der unteren Traverse zumindest in vertikaler Richtung schwimmend gelagert sein. Alternativ oder in Ergänzung können die zweiten Lagerblöcke gegenüber der unteren Traverse justierbar angeordnet sein. Je nach Anwendungsgebiet können die zweiten Lagerblöcke mit den ersten Lagerblöcken eine Einheit bilden. Die zweiten Lagerblöcke können die Holme zumindest teilweise von innen nach aussen umgreifen. Falls die Kräfte eine gewisse Höhe nicht übersteigen können die zweiten Lagerblöcke auch Diagonal bezüglich der Traverse angeordnet sein. Für eine gute Übertragung der Kräfte sind die zweiten Lagerblöcke wie erwähnt entlang der Holme in einem Abstand zueinander angeordnet. Um eine vom Aufbau her flexible Anordnung zu erreichen, kann mindestens ein zweiter Lagerblock über einen Adapter mit der Traverse von einer Seite und/oder von oben wirkverbunden sein. Die Traverse ist mit Vorteil mehrteilig ausgestaltet, so dass sie flexibel den Umständen angepasst werden kann. Sie kann ein Mittelteil und eines oder mehrere an diesen befestigte Seitenteile aufweisen. Die zweiten Lagerblöcke werden in der Regel am Mittelteil und oder mindestens einem der Seitenteile befestigt sein. Mit Vorteil wird auf kurze Lastwege geachtet. Die zweiten Lagerblöcke dienen primär zur Übertragung der Reaktionskräfte, welche aufgrund des Antriebsmomentes auftreten. Gewichtskräfte werden bevorzug über die ersten Lagerblöcke auf das Maschinenbett übertragen.

Die Traverse kann in gewissen Fällen auch als (flächige) Grundplatte ausgestaltet sein. Mindestens ein zweiter Lagerblock kann auf der Grundplatte angeordnet sein. Mindestens ein zweiter Lagerblock kann lösbar mit der Traverse wirkverbunden sein.

Anhand der in den nachfolgenden Figuren gezeigten Ausführungsbeispiele und der dazugehörigen Beschreibung werden Aspekte der Erfindung näher erläutert.

Es zeigen:
- Fig. 1: eine erste Ausführungsform einer erfindungsgemässen Haltevorrichtung von schräg vorne und oben;
- Fig. 2: eine zweite Ausführungsform einer erfindungsgemässen Haltevorrichtung von schräg vorne und oben;
- Fig. 3: den unteren Teil der Haltevorrichtung in einer Explosionsdarstellung;
- Fig. 4: Detail D aus Figur 3.

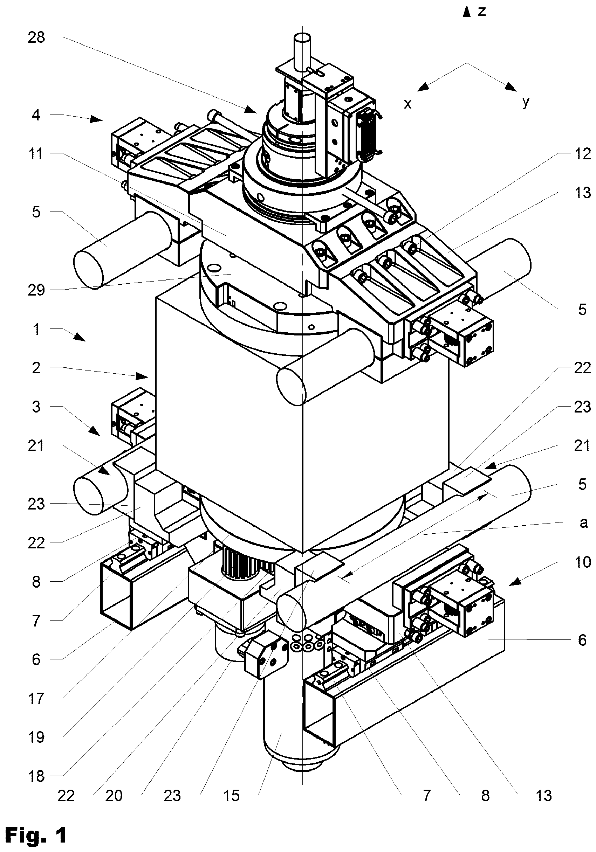

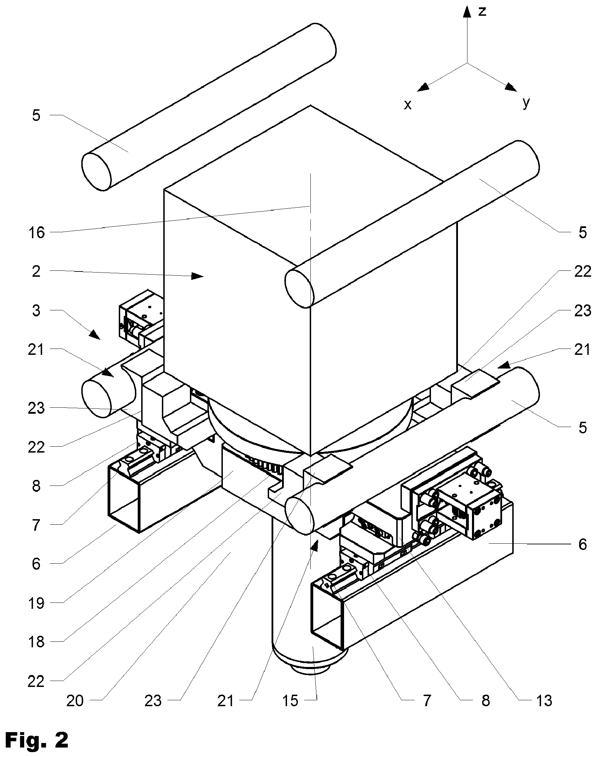

**Figur 1** zeigt eine erste Ausführungsform einer erfindungsgemässen Haltevorrichtung 1 für einen drehbaren Formmittelteil 2 in einer perspektivischen Darstellung von schräg oben. **Figur 2** zeigt eine zweite Ausführungsform einer Haltevorrichtung 1 in einer perspektivischen Darstellung von schräg oben.

Die restlichen Teile der Spritzgiessmaschine, u. a. Formaufspannplatten, usw, und des Werkzeuges, u. a. erste und zweite Werkzeughälfte, sind nicht dargestellt.

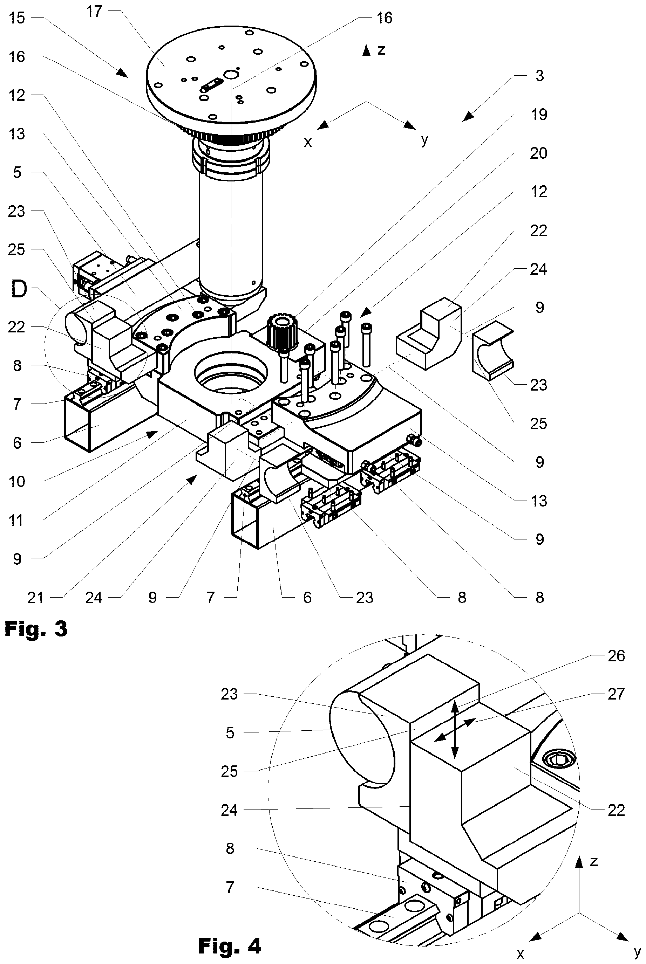

Beide Varianten der Haltevorrichtung 1 weisen eine untere Haltevorrichtung 3 auf, die in den **Figuren 3** und **4** teilweise zerlegt dargestellt ist. Im Unterschied zur ersten Ausführungsform (vgl. **Figur 1**) weist die in **Figur 2** gezeigte zweite Ausführungsform zusätzlich eine obere Haltevorrichtung 4 auf.

Von einer Spritzgiessmaschine (nicht im Detail dargestellt) sind in den **Figuren 1** bis **3** die in Längsrichtung (x-Richtung) der Spritzgiessmaschine verlaufende Holme 5 dargestellt. Von der Spritzgiessmaschine sind weiterhin zwei ebenfalls in Längsrichtung der Spritzgiessmaschine verlaufende Träger 6 dargestellt, welche ein Maschinenbett 6 bilden. Je nach Typ der Spritzgiessmaschine kann das Maschinenbett auch eine andere Ausgestaltung aufweisen.

Wie in den **Figuren 3** und **4** zu erkennen ist, sind auf dem Maschinenbett 6 zwei Linearführungen 7 angeordnet, auf welchen die untere Haltevorrichtung 3 in vertikaler Richtung (z-Richtung) über erste Lagerblöcke 8 in Längsrichtung (x-Richtung) verschiebbar abgestützt ist. Damit der Aufbau der unteren Haltevorrichtung 3 besser sichtbar ist, ist in **Figur 3** nur einer der beiden unteren Holme 5 dargestellt. Ausserdem ist die rechte Seite teilweise zerlegt dargestellt. Wie die Teile bei der Montage zusammengesetzt werden, ist mit gestrichelten Linien 9 schematisch dargestellt. **Figur 4** zeigt vergrössert Detail D aus **Figur 3****.**

Die untere Haltevorrichtung 3 weist in der gezeigten Ausführungsform eine mehrteilige Traverse 10 auf. Diese besteht aus einem Mittelteil 11 und zwei an diesem mit Schrauben 12 befestigten Seitenteilen 13. Der Mittelteil 11 weist eine Öffnung 14 auf, in welcher eine Dreheinheit 15 angeordnet ist. Die Dreheinheit 15 weist einen um eine Achse 16 drehbaren unteren Drehteller 17 auf, der zur Aufnahme und Halterung des Formmittelteils 2 dient. Unterhalb des unteren Drehtellers 17 ist ein erstes Antriebsrad 18 zu erkennen, welches im montierten Zustand mit einem zweiten Antriebsrad 19 eines Motors 20 wirkverbunden ist. Der Motor 20 ist seitlich an der Traverse 10 befestigt und überträgt das Antriebsmoment über die Antriebsräder 18, 19 auf den Drehteller 17 und damit auf den auf dem Teller 17 angeordneten Formmittelteil 2. Als Reaktion davon wirkt das Antriebsmoment auch auf die untere Traverse 10.

In der gezeigten Ausführungsform werden die in vertikaler Richtung wirkenden Gewichtskräfte über die hier von unten an den Seitenteilen 13 befestigten ersten Lagerblöcke 8 und die Führungsschienen 7 auf das Maschinenbett 6 übertragen. Die Torsionskräfte werden alternativ oder ergänzend über seitlich an den beiden Seitenteilen 13 befestigte Torsionsabstützungen 21 auf die Holmen 5 der Spritzgiessvorrichtung (nicht im Detail dargestellt) übertragen.

Die Torsionsabstützung 21 besteht in der gezeigten Ausführungsform aus einem Adapter 22 an dem quer zu den Holmen wirkende zweite Lagerblöcke 23 angeordnet sind. Die zweiten Lagerblöcke 23 wirken primär in Umfangsrichtung. Sie sind so ausgestaltet, dass sie primär zur Übertragung der Antriebsmomente auf die Holmen 5 dienen und damit zu einer Entlastung der ersten Lagerblöcke 8, bzw. der Führungsschienen 7 dienen. Die Lagerblöcke 23, bzw. die Adapter 22, sind so mit der Traverse verbunden, dass sie keine sich negativ auswirkenden vertikalen (z-Richtung) Kräfte auf die Holmen 5 übertragen. Bei Bedarf können die zweiten Lagerblöcke in z-Richtung schwimmend (beweglich) angeordnet sein. Ebene und/oder gekrümmte Wirkverbindungsflächen kommen in Frage.

In der gezeigten Ausführungsform sind die zweiten Lagerblöcke 23 auf dem Adapter 22 über erste und zweite Wirkverbindungsflächen 24, 25 abgestützt. Die Wirkverbindung ist so ausgestaltet, dass die Lagerblöcke 23 bei Bedarf gegenüber dem zugeordneten Adapter 22 verschiebbar, bzw. justierbar sind. Dies wird in Figur 4 schematisch durch die einen ersten und einen zweiten Pfeil 26, 27 angedeutet. Bei Bedarf können die Wirkverbindungsfläche 24, 25 auch gekrümmt, bzw. kugelig ausgestaltet sein, damit Fehlstellungen der Winkel korrigiert werden können. Allfällig erforderliche Kompensationen können z.B. alternativ oder in Ergänzung zwischen den Adaptern 22 und der Traverse erfolgen.

In der gezeigten Ausführungsform sind die Adapter 22 seitlich an den Seitenteilen 13 befestigt. Je nach Anwendungsgebiet und Spritzgiessvorrichtung sind andere Ausgestaltungen möglich. Z.B. können die Adapter 22 auch direkt in die Seitenteile 22 integriert sein. Um kürzere Lastwege zu erreichen, können die Seitenteile, bzw. die zweiten Lagerblöcke 23 auf einer Platte angeordnet sein. Sowohl der Mittelteil 11 als auch die Seitenteile 13 können einstückig ausgestaltet sein.

In der gezeigten Ausführungsform sind die zweiten Lagerblöcke 23 als Halbschalen ausgebildet, welche die Holme nur teilweise umgreifen. Die zweiten Lagerblöcke können jedoch auch so ausgestaltet sein, dass sie die Holme von einer anderen Richtung her angreifen (z.B. von aussen und/oder oben und/oder unten).

In der gezeigten Ausführungsform sind auf jeder Seite zwei zweite Lagerblöcke 23 angeordnet, welche je paarweise mit einem Holm 5 wirkverbunden sind. Erfindungsgemäss sind die zweiten Lagerblöcke 23 bezüglich der Holmen 5 in einem Abstand a (vgl. **Figur 1**) zueinander angeordnet, damit eine optimale Kraftübertragung garantiert wird.

Die in **Figur 1** gezeigte obere Haltevorrichtung 4 ist in der gezeigten Ausführungsform zusammen mit der unteren Haltevorrichtung 3 ein Bestandteil der Haltevorrichtung 1. Die obere Haltevorrichtung weist ebenfalls eine Traverse 10 auf, welche mehrteilig ausgestaltet ist. Die Traverse 10 weist auch hier ein Mittelteil 11 und zwei über Schrauben 12 daran befestigte Seitenteile 13 auf. An einer oberen Dreheinheit 28 ist ein oberer Teller 29 auf. Der drehbare Formmittelteil 2 ist im Betrieb zwischen dem unteren und dem oberen Drehteller 17, 29 eingespannt. Der obere Drehteller 29 kann über ein Gewinde 30 zum Ein- und Ausbau des Formmittelteils 2 verschoben in vertikaler Richtung verschoben werden. In der gezeigten Ausführungsform weist der obere Drehteller 29 keinen Antrieb für den Formmittelteil 2 aufweist. Beim Bedarf kann ein solcher vorgesehen werden.

**LISTE DER BEZUGSZEICHEN**

| | | | |
|---|---|---|---|
| 1 | Haltevorrichtung | 14 | Öffnung |
| 2 | Formmittelteil (Würfel) | 15 | Dreheinheit |
| 3 | Untere Haltevorrichtung | 16 | Drehachse |
| 4 | Obere Haltevorrichtung | 17 | Unterer Drehteller |
| 5 | Holmen (Spritzgiessmaschine) | 18 | erstes Antriebsrad |
| 6 | Maschinenbett (Spritzgiessma- | 19 | zweites Antriebsrad |
| | schine) | 20 | Motor |
| 7 | Führungsschienen (Linearfüh- | 21 | Torsionslager |
| | rung) | 22 | Adapter |
| 8 | erster Lagerblock (Linearfüh- | 23 | Zweite Lagerblöcke |
| | rung) | 24 | Erste Wirkverbindungsfläche |
| 9 | Linien für Montage | 25 | Zweite Wirkverbindungsfläche |
| 10 | Untere Traverse | 26 | erster Pfeil |
| 11 | Mittelteil | 27 | zweiter Pfeil |
| 12 13 | Schrauben Seitenteil | 28 | Obere Dreheinheit |

## Patentansprüche

1. Haltevorrichtung (1) für einen um eine vertikale Achse drehbaren Formmittelteil (2) in einer Spritz-giessmaschine mit einem um eine Drehachse (16) drehbaren und über einen Motor (20) angetriebenen Teller (17), der zur Halterung des drehbaren Formmittelteils (2) dient, mit einer unteren Traverse (10), welche über erste Lagerblöcke (8) und Führungsschienen (7) auf einem Maschinenbett (6) der Spritzgiessmaschine abgestützt in Längsrichtung (x) verschiebbar gelagert ist, **dadurch gekennzeichnet, dass** zweite Lagerblöcke (23) vorhanden sind, mittels denen die untere Traverse (10) in Umfangsrichtung gegenüber einem unteren Paar von Holmen (5) der Spritzgiessmaschine abgestützt ist wobei die zweiten Lagerblöcke (23) paarweise an einem Holm (5) in einem Abstand (a) zueinander angeordnet sind.

2. Haltevorrichtung (1) gemäss Patentanspruch 1, **dadurch gekennzeichnet, dass** die zweiten Lagerblöcke (23) gegenüber der unteren Traverse (10) in vertikaler Richtung schwimmend gelagert sind.

3. Haltevorrichtung (1) gemäss einem der vorangehenden Patentansprüche, **dadurch gekennzeichnet, dass** die zweiten Lagerblöcke (23) gegenüber der unteren Traverse (10) justierbar angeordnet sind.

4. Haltevorrichtung (1) gemäss einem der vorangehenden Patentansprüche, **dadurch gekennzeichnet, dass** die zweiten Lagerblöcke (23) die Holme (5) von innen nach zumindest teilweise aussen umgreifen.

5. Haltevorrichtung (1) gemäss einem der vorangehenden Patentansprüche, **dadurch gekennzeichnet, dass** die zweiten Lagerblöcke (23) bezüglich der Drehachse (16) diagonal zueinander angeordnet sind.

6. Haltevorrichtung (1) gemäss einem der vorangehenden Patentansprüche, **dadurch gekennzeichnet, dass** mindestens ein zweiter Lagerblock (23) über einen Adapter (22) mit der Traverse (10) wirkverbunden ist.

7. Haltevorrichtung (1) gemäss einem der vorangehenden Patentansprüche, **dadurch gekennzeichnet, dass** die Traverse (10) mehrteilig ausgestaltet ist.

8. Haltevorrichtung (1) gemäss einem der vorangehenden Patentansprüche, **dadurch gekennzeichnet, dass** die Traverse (10) eine Grundplatte aufweist und dass die zweiten Lagerblöcke (23) auf und/oder seitlich an der Grundplatte angeordnet sind.

9. Haltevorrichtung (1) gemäss einem der vorangehenden Patentansprüche, **dadurch gekennzeichnet, dass** mindestens ein zweiter Lagerblock (23) lösbar mit der Traverse (10) wirkverbunden ist.

10. Haltevorrichtung (1) gemäss einem der vorangehenden Patentansprüche, **dadurch gekennzeichnet, dass** die Haltevorrichtung (1) eine obere Haltevorrichtung (4) umfasst, mittels der der drehbare Mittelteil (2) gegenüber den oberen beiden Holmen (5) der Spritzgiessmaschine gelagert ist.

11. Spritzgiessvorrichtung mit einer Haltevorrichtung gemäss einem der vorangehenden Patentansprüche.

## Claims

1. Holding device (1) for a central mould part (2) that is rotatable about a vertical axis in an injection moulding machine, having a disc plate (17) that is rotatable about a rotation axis (16) and is driven by a motor (20), said disc plate (17) serving for mounting the rotatable central mould part (2), having a lower traversing unit (10) which by way of first mounting blocks (8) and guide rails (7) is supported on a machine bed (6) of the injection moulding machine and is mounted so as to be displaceable in the longitudinal direction (x),
**characterized in that** second mounting blocks (23) are present by means of which the lower traversing unit (10) in the circumferential direction is supported in relation to a lower pair of beams (5) of the injection moulding machine, wherein the second mounting blocks (23) are disposed in pairs so as to be apart by a mutual spacing (a) on a beam (5).

2. Holding device (1) according to Claim 1, **characterized in that** the second mounting blocks (23) are mounted so as to float in the vertical direction in relation to the lower traversing unit (10).

3. Holding device (1) according to one of the preceding claims, **characterized in that** the second mounting blocks (23) are disposed so as to be adjustable in relation to the lower traversing unit (10).

4. Holding device (1) according to one of the preceding claims, **characterized in that** the second mounting blocks (23) at least partially encompass the beams (5) from the inside towards the outside.

5. Holding device (1) according to one of the preceding claims, **characterized in that** the second mounting blocks (23) in relation to the rotation axis (16) are disposed so as to be mutually diagonal.

6. Holding device (1) according to one of the preceding claims, **characterized in that** at least one second mounting block (23) is operatively connected to the traversing unit (10) by way of an adapter (22).

7. Holding device (1) according to one of the preceding claims, **characterized in that** the traversing unit (10) is designed having multiple parts.

8. Holding device (1) according to one of the preceding claims, **characterized in that** the traversing unit (10) has a base plate, and **in that** the second mounting blocks (23) are disposed on and/or on the side of the base plate.

9. Holding device (1) according to one of the preceding claims, **characterized in that** at least one second mounting block (23) is operatively connected in a releasable manner to the traversing unit (10).

10. Holding device (1) according to one of the preceding claims, **characterized in that** the holding device (1) comprises an upper holding device (4) by means of which the rotatable central part (2) is mounted in relation to the two upper beams (5) of the injection moulding machine.

11. Injection moulding device having a holding device according to one of the preceding claims.

## Revendications

1. Dispositif de support (1) pour une partie centrale de moule pouvant tourner (2) autour d'un axe vertical dans un dispositif de moulage par injection avec un plateau (17) pouvant tourner autour d'un axe de rotation (16) et entraîné par un moteur (20), qui est destiné à supporter la partie centrale de moule pouvant tourner (2), avec une traverse inférieure (10), qui est montée de façon déplaçable en direction longitudinale (x) en étant supportée par des premiers blocs de palier (8) et des rails de guidage (7) sur un bâti de machine (6) du dispositif de moulage par injection, **caractérisé en ce qu'**il se trouve des deuxièmes blocs de palier (23), au moyen desquels la traverse inférieure (10) est supportée en direction périphérique par rapport à une paire inférieure de longerons (5) du dispositif de moulage par injection, dans lequel les deuxièmes blocs de palier (23) sont disposés par paires sur un longeron (5) à une distance (a) l'un de l'autre.

2. Dispositif de support (1) selon la revendication 1, **caractérisé en ce que** les deuxièmes blocs de palier (23) sont montés de façon flottante en direction verticale par rapport à la traverse inférieure (10).

3. Dispositif de support (1) selon l'une quelconque des revendications précédentes, **caractérisé en ce que** les deuxièmes blocs de palier (23) sont disposés de façon ajustable par rapport à la traverse inférieure (10).

4. Dispositif de support (1) selon l'une quelconque des revendications précédentes, **caractérisé en ce que** les deuxièmes blocs de palier (23) entourent les longerons (5) de l'intérieur au moins partiellement vers l'extérieur.

5. Dispositif de support (1) selon l'une quelconque des revendications précédentes, **caractérisé en ce que** les deuxièmes blocs de palier (23) sont disposés en diagonale l'un par rapport à l'autre par rapport à l'axe de rotation (16).

6. Dispositif de support (1) selon l'une quelconque des revendications précédentes, **caractérisé en ce qu'**au moins un deuxième bloc de palier (23) est relié de manière active à la traverse (10) par un adaptateur (22).

7. Dispositif de support (1) selon l'une quelconque des revendications précédentes, **caractérisé en ce que** la traverse (10) est réalisée en plusieurs parties.

8. Dispositif de support (1) selon l'une quelconque des revendications précédentes, **caractérisé en ce que** la traverse (10) présente une plaque de base et **en ce que** les deuxièmes blocs de palier (23) sont disposés sur et/ou latéralement à la plaque de base.

9. Dispositif de support (1) selon l'une quelconque des revendications précédentes, **caractérisé en ce qu'**au moins un deuxième bloc de palier (23) est relié de manière active de façon détachable à la traverse (10).

10. Dispositif de support (1) selon l'une quelconque des revendications précédentes, **caractérisé en ce que** le dispositif de support (1) comprend un dispositif de support supérieur (4), au moyen duquel la partie centrale de moule pouvant tourner (2) est montée par rapport aux deux longerons supérieurs (5) du dispositif de moulage par injection.

11. Dispositif de moulage par injection comportant un dispositif de support selon l'une quelconque des revendications précédentes.
